Europäisches Patentamt

European Patent Office

Office européen des brevets

(11) Publication number: **0 102 751**
**B1**

(12) **EUROPEAN PATENT SPECIFICATION**

(45) Date of publication of patent specification: **07.01.87**

(51) Int. Cl.⁴: **A 01 C 3/06**

(21) Application number: **83304409.2**

(22) Date of filing: **29.07.83**

(54) **Apparatus for dispensing material.**

(30) Priority: **03.08.82 GB 8222367**
**26.11.82 GB 8233760**

(43) Date of publication of application:
**14.03.84 Bulletin 84/11**

(45) Publication of the grant of the patent:
**07.01.87 Bulletin 87/02**

(84) Designated Contracting States:
**AT BE DE FR NL SE**

(56) References cited:
**EP-A-0 077 000**
**FR-A- 962 578**
**FR-A-2 149 097**
**US-A-4 362 272**

**Leaflet from "IDEAL Machinery CO. LTD",**
**Québec**

(73) Proprietor: **BERNEWODE DESIGNS LIMITED**
**Madges, Long Crendon**
**Aylesbury Buckinghamshire HP18 9AL (GB)**

(72) Inventor: **Meek, Nigel William**
**Madges Long Crendon**
**Aylesbury Buckinghamshire HP18 9AL (GB)**

(74) Representative: **Laight, Martin Harvey et al**
**W H Beck, Greener & Company**
**7 Stone Buildings Lincoln's Inn**
**London WC2A 3SZ (GB)**

Courier Press, Leamington Spa, England.

EP 0 102 751 B1

# Description

The present invention relates to apparatus for dispensing material, especially but not exclusively for spreading manure.

In this specification, the term manure means any form of organic waste material which it is required to spread over the ground to improve soil quality, and includes animal and poultry excrement whether alone or when mixed with waste vegetable material such as straw stubble, and includes such material whether in a solid, semi-solid slurry, or partially liquid form.

Known forms of manure spreading apparatus include a simple container mounted on a mobile frame in the form of an open topped tank, with an exit at the rear having a rotor for breaking up and urging material out through the rear exit of the tank across the full width of the vehicle. Slats and floor chains within the container move the manure rearwardly to the shredding rotor which distributes the manure over the tail of the apparatus. Another known form of manure spreader includes a similar mobile tank having a rotor mounted therein for rotation about a horizontal axis aligned along the direction of movement of the apparatus, the rotor having a plurality of chains distributed along its length and the arrangement being such that rotation of the rotor causes the chains to fling the manure upwardly and outwardly over one side of the container wall onto the ground. Disadvantages of the former apparatus include difficulty of handling liquid and semi-liquid manure, and the fact that towards the end of a run the weight of the manure is concentrated at the rear of the container, which reduces traction at a tractor or other vehicle towing the container. Disadvantages of the second mentioned form of spreader include the haphazard nature of the distribution of manure by the rotating chains, and also the high power consumption.

Another method of spreading manure on land which is used where the manure is of a liquid consistency, comprises using a tanker of the liquid, and spraying the liquid manure over the land by use of a pump and spray head. Until recently, it was necessary for farmers to choose an appropriate machine from a range of machines, depending on whether the manure to be spread was solid, semi-solid, or liquid. There is a requirement for a single machine which will handle with equal efficiency manure in these various states of solidity.

An improved form of manure spreading apparatus which has found some commercial acceptance comprises an elongate hopper having inwardly and downwardly sloping sides and vertical front and rear end walls, mounted on a mobile frame for towing behind a tractor. Along the base of the hopper runs an auger driven by the power take-off (PTO) of the towing tractor and rotating about an axis aligned along the direction of travel of the apparatus. The auger has a plurality of vanes distributed along its axis, and operates to draw manure axially along the hopper towards an opening in the side of the hopper at the front of the apparatus. The auger extends for a short distance in front of the side opening and at this region the sense of the auger vanes is reversed. Just outside the side opening is mounted an impeller driven in rotation about a horizontal axis parallel to the auger axis, and arranged to fling manure sideways from the apparatus at considerable speed, in an overshot mode such that manure is propelled upwardly over the impeller axis and outwardly from the side of the apparatus. Machines of this kind are described in EP—A—0077000 (Hedlund Manufacturing Co. Inc.), published on 20-04-1983 and which is comprised in the state of the art pursuant to Art. 54(3) and (4) EPC, and in a leaflet entitled "IDEAL LIQUID and SEMI-LIQUID MANURE SPREADE" by Ideal Machinery Co. Ltd. Quebec.

Although this apparatus has found some commercial acceptability, it is subject to a number of disadvantages where different forms of manure, ranging from liquid to semi-solid and solid forms, is used in the same machine. In particular there has been difficulty with solid manure when the auger is ineffective to draw all the manure along the length of the hopper, and when difficulty is found in passing solid manure out through the side opening. One attempt to overcome this disadvantage has been provision of means for raising and lowering the entire auger inside the hopper under the control of the operator, so as to attempt to loosen and move upper levels of manure in the hopper. Such an arrangement is costly, and depends upon operator skill to effect the raising and lowering at required times. Also the raising and lowering leaves part of the field deficient in manure cover since the auger is only raised and lowered to correct a lack of distribution after it has been noticed.

It is an object of the present invention to provide an improved apparatus for dispensing material, and in preferred embodiments to provide a manure spreading apparatus with improved action in conveying manure by an auger, and in transfering manure from the hopper to the impeller of the apparatus for distribution over the ground.

According to the present invention there is provided apparatus for dispensing material comprising a mobile frame for movement over the ground, a container for the material, an auger mounted in the container with its axis of rotation aligned substantially along the direction of movement of the apparatus for effecting movement of the material predominantly along the direction of the auger axis, an opening in the container for exit of the material, the opening being situated at a side of the apparatus relative to the direction of movement of the apparatus and being situated in the lower region of the container, an impeller mounted outside the container in the region of the side opening for throwing the material sideways from the apparatus for rotation of the impeller about an axis aligned substantially along the direction of movement of the apparatus and a transfer rotor mounted coaxially with the auger opposite the side opening for effecting movement of the material inside the container towards the side opening, the transfer rotor comprising a core and a plurality of paddles for pushing the material through the side opening of the container in a direction or direction substantially at right-angles to the axis of the auger, the rotor being arranged to rotate in an undershot mode, and each paddle being arranged to trail from the rotor core relative to the sense of rotation of the rotor.

Conveniently, the angle between each paddle and a radius of the rotor passing through the distal part of the attachment region of the paddle is in the range 55° to 80°.

In some arrangements, each paddle is arranged to contact and wipe around the inside of the container at the base thereof during rotation of the rotor.

The invention has particular application where the material consists of manure and the apparatus is arranged for spreading manure over a considerable distance over the ground in a controlled, uniform layer for cultivation purposes. However, apparatus embodying the invention has use in many other applications. For example dispensing apparatus embodying the invention may be used as a feeder wagon for depositing silage into a manger for cattle, and in such a case a hood may be provided over the impeller so as to direct the feed downwardly into the manger. The apparatus may be used for strewing straw in a yard for bedding. Bales of straw may be released from the string ties thereof and deposited in the container. The auger, transfer means and impeller will then shred the straw and distribute it onto the yard floor. In another application, forage such as chopped grass may be transported in the container, and may be unloaded by operation of the auger, transfer means, and impeller. The grass may be thrown out into a silage pit or may form a silage mound in a yard. In a further example, grain may be transported in the container and then be unloaded in a building by being thrown in a stream by the impeller.

Preferably the side opening is at the front of the apparatus, relative to the direction of movement of the apparatus, and the sense of the auger vane or vanes is such that material is conveyed forwardly to bring material forwardly to the region of the side opening. Preferably the transfer rotor is coupled to the auger for rotation therewith. Conveniently the transfer rotor forms part of the main auger structure, there being a common shaft or core structure, the said auger consisting of parts of the common core structure on which auger vanes are mounted for axial movement of material, and the said transfer rotor comprising a portion of the core structure directly opposite the side opening at which the auger vanes are absent and in their place there are provided the paddles for producing the required movement of material.

Conveniently the paddles are substantially planar and the plane of each paddle is substantially parallel to the axis of the auger. Alternatively however the paddles may be curved.

Preferably the rotor has one or more spiral series of paddles around its axis, axially adjacent paddles being offset from each other around the circumference of the rotor.

Each paddle may have a resilient flap, or may be formed of resilient material, and be urged outwardly towards the impeller in the region of the side opening, but deflectable inwardly upon contact with the hopper or other structure of the apparatus. Such an arrangement allows the transfer rotor to be positioned very close to the impeller, so as to leave little or no space between the rotor and the impeller at the transfer region.

As has been mentioned the transfer rotor rotates in an undershot mode, that is to say such as to carry material sideways beneath the rotor, preferably the impeller rotates in an overshot mode, that is to say such as to carry material sideways upwardly and over the impeller.

Preferably the container for material comprises an elongate hopper with its longitudinal axis aligned along the intended direction of movement of the apparatus, having sloping sides leading inwardly and downwardly towards the auger which lies along the base of the hopper. Preferably the said side opening in the container is positioned towards the front of the apparatus.

There will now be considered a further problem with which the invention is concerned. Even where a transfer means, such as has been described in accordance with the invention, is used in addition to an auger, it is possible to get a build up of material in the region of the side opening. This applies to certain materials, such as more solid manure, which are difficult to feed from the auger system to the impeller.

Problems can occur when the auger efficiently conveys the material to the spreading system but because of the material consistency, the material tends to smear and build up above the auger in the vicinity of the feed opening. This build up causes compaction and eventually a bridge is formed over the auger and the transfer rotor, which prevents any material falling into the auger and transfer rotor and being spread. There may also be provided in accordance with the invention, means for dealing with this problem of bridging.

In order to deal with this problem of bridging, there may be included in the apparatus a movable member movable relative to the container between a raised position and a lowered position in which the member is slightly above the level of the auger, and drive means for moving the member between the two said positions and for applying a downward force to the member during movement from the raised to the lowered position for breaking bridged material which has built up above the level of the auger during operation.

Preferably the drive means is arranged to move the movable member between a raised position in which the member is substantially clear of material in the container, and said lowered position slightly above the level of the auger.

Preferably the said drive means if controllable by an operator observing the dispensing of material, the member being maintained in the raised positioned during operation and being lowered intermittently by the operator to break bridged material.

In a preferred form the member comprises a pivotted arm movable between a substantially vertical raised position and a substantially horizontal lowered position, the arm being aligned along the length of the auger when in the lowered position.

It has been found particularly effective for the movable member to comprise a single elongate arm positioned centrally along the container aligned along the direction of the auger, and for the arm to strike the bridge material at its weakest part, that is to say at the apex of the bridge. Preferably the arm is narrow relative to the width of the container, preferably the width of the arm not exceeding 10% of the width of the bridged material, most preferably in the range 3% to 5% of the width of the bridged material.

Conveniently the said drive means comprises a double acting hydraulic ram, conveniently operated by the operator of the dispensing apparatus to produce a downward pressure by the member on the apex of the bridge material to break the bridged material by pressure and/or impact of the member on the material.

The invention has particular application where the material consists of manure and the apparatus is arranged for spreading manure over considerable distance over the ground in a controlled, uniform layer for cultivation purposes. However, manure is often of the form such that the auger produces a build up material which bridges above the level of the auger, and which is to be broken by the apparatus embodying the invention.

There will now be set out a number of further preferred features of the invention.

It is believed that in previously known manure spreading apparatus of the kind generally discussed hereinbefore, the apparatus has performed poorly when used with solid manure, because the proportions and dimensions of the auger used in comparison with the type of hopper used, has been inappropriate, and this has resulted in the need for raising and lowering the auger when solid manure has been used.

In accordance with the preferred forms of apparatus embodying the invention, the following proportions and dimensions may be adopted:—

(i) the cross-sectional area swept by the auger may be made to be in the range 35% to 50% of the cross-sectional area of the hopper space available for material up to a level filling at the top of the hopper, the cross-sectional areas being taken at right-angles to the axis of rotation of the auger, and/or

(ii) the diameter of the outer periphery of the auger may be made to be greater than or equal to 50%, preferably greater than or equal to 70% of the total height of the hopper taken from the base of the hopper to the top of the hopper, and/or

(iii) the average radial distance from the outer periphery of the core structure of the auger to the outer periphery of the vane or vanes of the auger may be made to be greater than or equal to the average width of the core structure taken at right-angles to the axis of rotation of the auger.

Embodiments of the invention will now be described by way of example with reference to the accompanying drawings, in which:—

Figures 1(a), 1(b), and 1(c), show side, plan and end views respectively of apparatus for spreading manure embodying the present invention, and illustrate the apparatus in general overall form;

Figure 2 is a diagrammatic cross-section along the lines II—II in Figure 1(a), and shows in detail a transfer rotor in a manure spreading apparatus embodying the invention, with Figures 2(a) and 2(c) showing modifications;

Figure 2(b) is a diagrammatic side view of an assembly embodying the invention for breaking bridged material across the hopper of the apparatus shown in preceding figures; and

Figure 3 is a diagrammatic cross-section along the lines III—III in Figure 1(a), and shows various preferred relationships in accordance with the invention between the auger and hopper in a manure spreading apparatus embodying the invention.

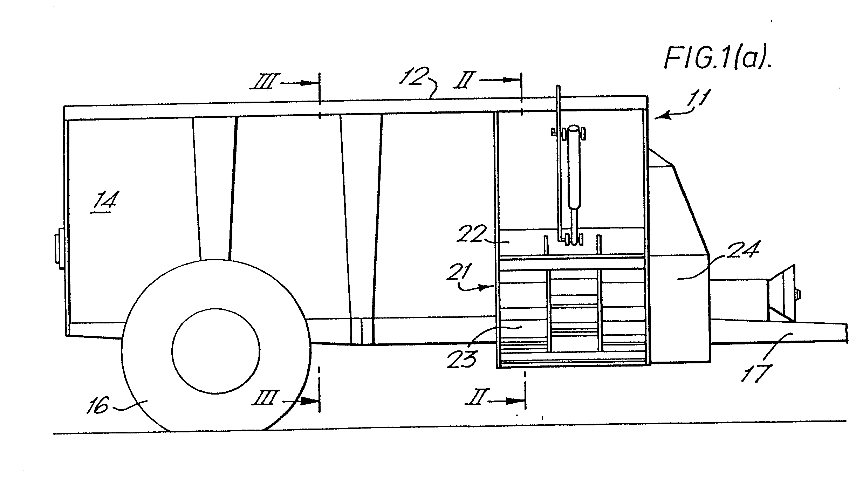

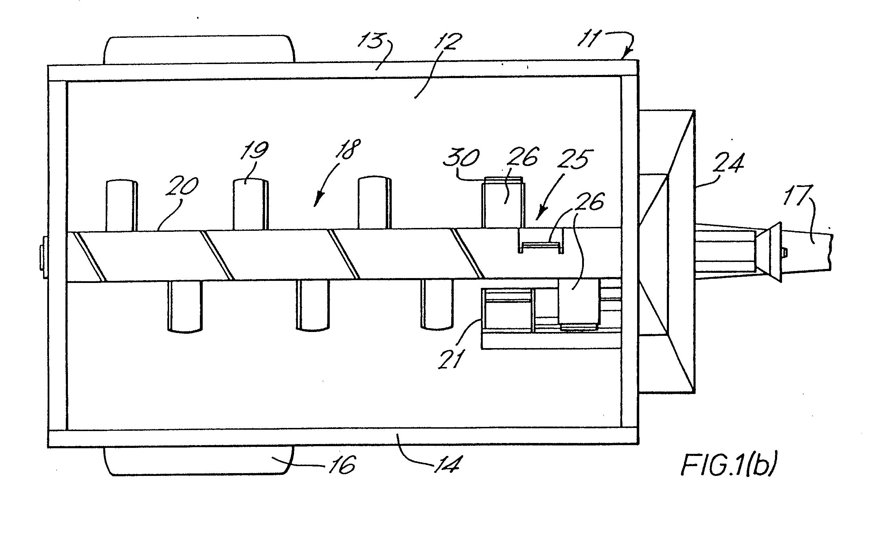

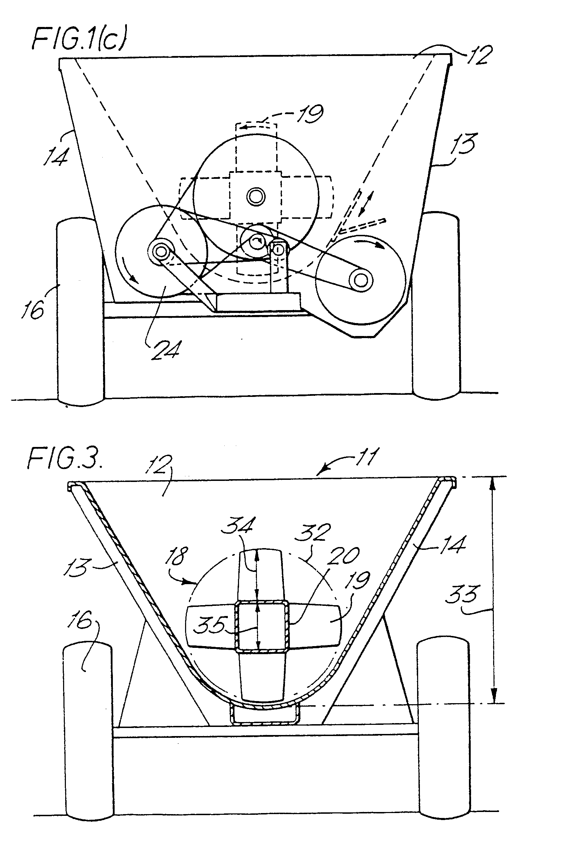

Referring firstly to Figures 1(a), 1(b), and 1(c), a manure spreading apparatus 11 embodying the invention comprises an elongate hopper 12 having inwardly sloping sides 13 and 14, and mounted on land wheels 16 to be towed by a linkage 17 behind a tractor (not shown). Inside the hopper 12 running along the base thereof is an auger 18 having discontinuous auger vanes 19 mounted on a square core 20. An opening 21 is provided at the front of the apparatus 11 on the right-hand side in the side wall 14, for distribution of manure. The opening 21 may be closed by a hydraulically operated gate 22. Just outside the opening 21 an impeller 23 is mounted for driven rotation about a horizontal axis in an overshot mode such as to throw manure emerging from the opening 21 upwardly and sideways of the apparatus 11 so as to distribute the manure over the fields. Both the impeller 23 and the auger 18 are driven from the pto of the tractor, by way of reduction gearing 24.

As shown in particular in Figure 1(b), the sense of the vanes 19 on the auger 18 is such that in operation the auger 18 draws manure forwardly to the vicinity of the opening 21 from the rear of the hopper 12.

At the section of the core 20 directly opposite the opening 21, there is positioned a transfer rotor 25 which is coaxial with the auger 18 and shares a common core 20. The vanes 19 of the auger 18 are replaced by four paddles 26 forming the transfer rotor 25. Three paddles 26 are shown, the fourth being hidden by the core 20. The paddles 26 are arranged in a spiral series of paddles, and axially adjacent paddles are offset from one another so as to provide an open structure of the transfer rotor 25.

The purpose of the transfer rotor 25 is for the paddles 26 to push manure through the opening 21 to the impeller 23 in a direction substantially at right-angles to the axis of rotation of the auger 18. The auger 18 is rotated in a sense such that the transfer rotor 25 rotates in an undershot mode transferring the manure to the impeller 23 which operates in an overshot mode. The open staggered arrangement of the paddles 26 has two advantages. Firstly it allows stones and other debris to come free from the transfer rotor, and secondly it gives an even feed of manure to the opening 21.

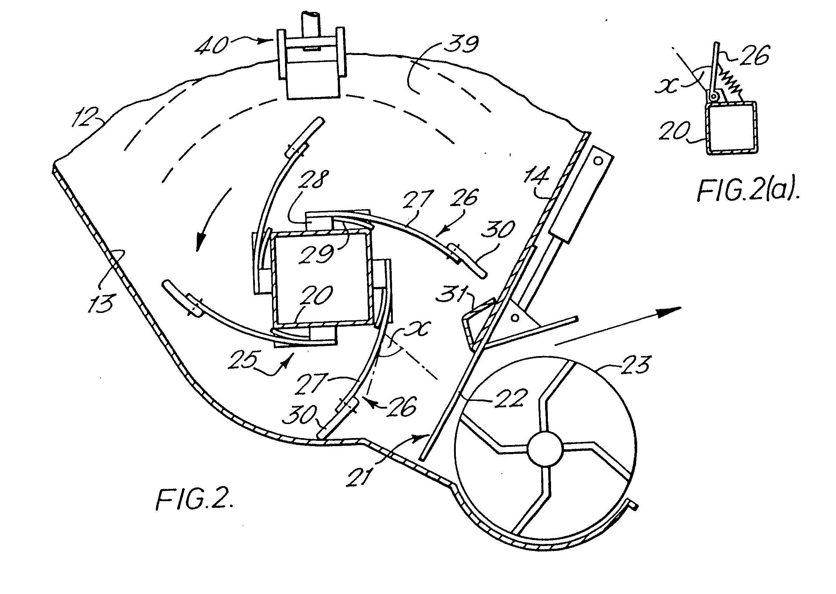

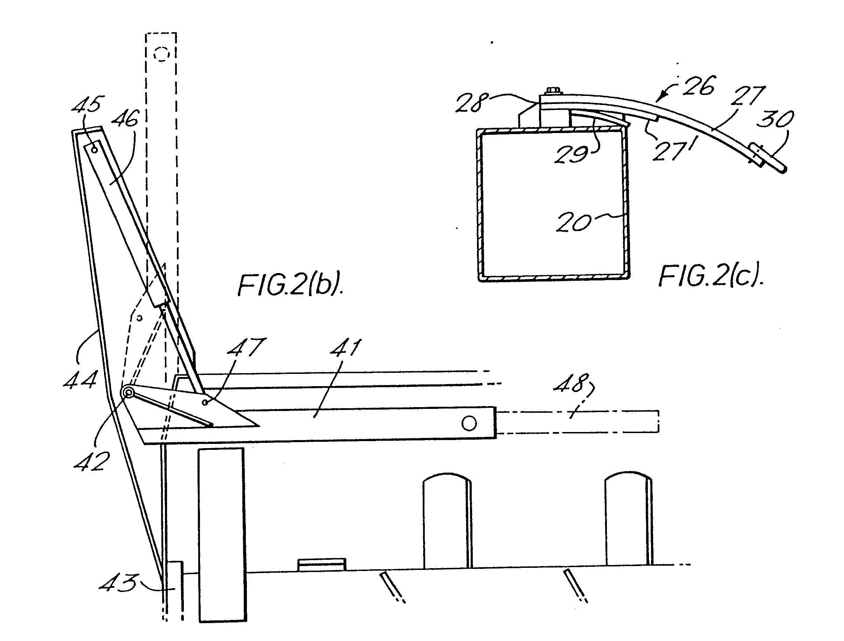

Turning now to Figure 2, it will be seen that each paddle 26 comprises a resilient portion 27 of leaf spring steel which is attached to a side face of the square section core 20, and the paddle then trails from the core 20 at an angle $x$ of about $68\frac{1}{2}°$, taken from a radius through the centre of the core 20. The resilient portion 27 of the paddle 26 has a backing plate 29 at its rear which provides a smooth curved surface to which the spring steel portion 27 can be deflected if the paddle meets an obstruction. Fastened to the outer portion of each portion 27 is a rubber wiper 30 which contacts and wipes around the inside of the hopper 12 at the base thereof. At the opening 21, the rubber wiper 30 extends outwardly to a distance which just avoids contact with the periphery of the impeller 23. A projection 31 of the wall 14 is contacted by the rubber wiper 30 and removes excess manure from the wiper flap.

Thus the paddles shown in Fig. 2 are made from a leaf spring steel clamped to the core by a bolt or similar fixing device. Suitable side guides may be provided to prevent movement. These are not absolutely essential, but reduce the side load on the fixing if a foreign object is encountered. The paddles 27 are provided with the curved back-up plate 29 so that as the paddles bend under load, stress is evenly distributed along the spring paddle. Alternatively the curve of the plate 29 can be part of a round tube auger core which has the same effect. Additionally, in a heavy duty application or in larger diameter augers, the leaf spring paddle 27 can be provided with an assister leaf 27' to act as a leaf spring to dissipate the stresses in the paddle 26. Such an arrangement is shown in Fig. 2(c).

Also shown in Figure 2 is an assembly indicated generally at 40 which embodies a further aspect of the present invention and has for its purpose the breaking of any bridge of material which may form in certain circumstances across the hopper 12 at a region indicated diagrammatically at 39. The assembly 40 is shown in detail in diagrammatic side view in Figure 2(b).

The assembly 40 comprises a movable arm 41 which is pivotally mounted at pivot 42 on a bracket 44 extending upwardly from an end panel 43 of the hopper 12. A double acting hydraulic ram 46 is pivotally coupled between the arm 41 and the bracket 44 at pivots 47 and 45 respectively, and the ram 46 acts to raise and lower the arm 41 between a lower horizontal position shown in full lines, and a raised, vertical position shown in broken lines. The arm 41 has provision for a telescopic extension 48 to be fitted which can be adjusted in length to suit dimensions of the apparatus and conditions of use. As an alternative to a double acting ram, in some arrangements there may be used a single acting ram giving powered downward movement, together with a return spring for upward movement.

In operation, the arm 41 is raised during filling of the hopper 12, and in most circumstances will remain raised during normal operation. If the operator notices that the impeller 23 is starved of material for spreading, or notices bridging in the hopper 12, he will actuate the appropriate hydraulic control on the tractor hydraulics system and actuate the ram 46 to move the arm 41 down towards the lowered horizontal position. The arm 46 applies a downward force on the arm which breaks the bridged material in the region 39 in Figure 3 so that manure again passes to the auger 18 and transfer rotor 25.

In some materials it is possible to use the pressure arm 41 as a preventative device as well as a solution to a bridging problem, by applying pressure continuously during spreading so that the material is pushed into the auger continuously.

Referring to Figure 3 there is shown diagrammatically a cross-section along the lines III—III in Figure 1(a), which illustrates various preferred proportions of the auger 18 in relationship to the hopper 12. Preferably the cross-sectional area swept by the outer periphery of the auger 18, indicated in dotted lines, is in the range 35 to 50% of the total cross-sectional area available to the manure up to the level top of the hopper 12. Preferably the diameter of the outer perimeter of the auger, indicated at dotted lines at 32, is greater than or equal to 70% of the total height of the hopper from the inside of its base to the top of the hopper, the latter height being indicated at 33. Finally it is preferred that the distance between the core 20 and the outer periphery of the auger, indicated at 34 should be at least equal to the core width, indicated at 35.

It is found that proportions falling within these preferred ranges give good transfer of solid manure along the hopper. It has been found to be important that the overall size of auger 18 should be larger relative to the hopper size than has previously been used, and that fewer but larger auger flights should be used so as to be capable of performing the same work at a slower speed of revolution. All these factors together reduce bridging of the manure across the top of the hopper, and contributes to a continuous breakup and conveying of solid manure.

By way of example of dimensions which may be used in constructing an embodiment of the invention, the square core 20 of the auger 18 may have a width of 10 inches, and each vane 19 may have a height also of 10 inches, giving an overall auger diameter of 76.20 cm (30 inches). Such an auger would be suitable for a 2032 kg (two ton) spreader, which for example may have an auger of overall length 243.84 cm (8ft) and may have a side opening 21 of length 60.96 cm (24 inches). Embodiments may conveniently be made for a load of 10160 kg (ten tons) of manure, and on such a size of machine, the height of each flight 19 may be 33.02 cm (13 inches), giving an overall diameter of 91.44 cm (36 inches) for the auger 18. For a 10160 kg (ten ton) spreader the overall length of the auger and hopper may be 487.68 cm (16 ft), and the length of the side opening 21 may be 121.92 cm (48 inches).

Conveniently each flight or vane 19 may be set at an angle in the range 30° to 35° to the normal to the axis, and the auger may have a 55.88 cm (22 inch) pitch for example. The angles of the sides of the hopper 12 may conveniently be in the range 25° to 35°, for example 30°, to the vertical.

Referring particularly to Figure 2 or 2(a), conveniently the angle between each paddle 26, and a radius passing through the core centre and part of the attachment of the paddle indicated at *x*, may be in the range 55° to 80°, for example 68½°. Conveniently the axial length of each paddle 26 may be 12.70 cm (5 inches), and the outward length of each paddle 26 should be sufficient for the paddles to give an overall diameter to the transfer rotor 25 of approximately the same diameter as the auger 18. The diameter of the impeller 23 may for example be 45.72 cm (18 inches), and its axial length may be 76.20 cm (30 inches).

In an alternative arrangement to that shown in Figure 2, each paddle 26 may comprise a main rigid portion which is attached to a square section core at a corner thereof, the rigid portion of the paddle being supported at its rear by a strut. Fastened to the outer portion of each rigid paddle part is a rubber wiper which contacts and wipes around the inside of the hopper 12 at the base thereof. At the opening 21, the rubber wiper extends outwardly to a distance which just avoids contact with the periphery of the impeller 23.

In further alternative embodiments, in place of the rubber flaps or in addition thereto, a rigid part of each paddle 26 may be spring loaded with a spring support, as shown in Fig. 2(a).

It will be appreciated that many variations in the construction of embodiments of the invention may be made without departing from the scope of the invention as defined by the claims. For example the apparatus may be self propelled instead of being towed by a tractor. The flexible extensions of the paddles may be of any suitable synthetic plastics material in place of rubber. Also it will be appreciated that the embodiment described with reference to the drawings, although primarily intended for spreading manure, may also be used for distributing other material, whether with or without modification such as provision of a hood over the impeller to direct material downwardly rather than generally upwardly and outwardly.

## Claims

1. Apparatus for dispensing material comprising a mobile frame for movement over the ground, a container (12) for the material, an auger (18) mounted in the container (12) with its axis of rotation aligned substantially along the direction of movement of the apparatus for effecting movement of the material predominantly along the direction of the auger axis, an opening (21) in the container (12) for exit of the material, the opening (21) being situated at a side of the apparatus relative to the direction of movement of the apparatus and being situated in the lower region of the container (12), an impeller (23) mounted outside the container (12) in the region of the side opening (21) for throwing the material sideways from the apparatus by rotation of the impeller (23) about an axis aligned substantially along the direction of movement of the apparatus; and a transfer rotor (25) mounted coaxially with the auger (18) opposite the side opening (21) for effecting movement of the material inside the container (12) towards the side opening (21), the transfer rotor (25) comprising a core (20) and a plurality of paddles (26) for pushing the material through the side opening (21) of the container (12) in a direction or directions substantially at right-angles to the axis of the auger (18), the rotor (25) being arranged to rotate in an undershot mode, and each paddle (26) being arranged to trail from the rotor core (20) relative to the sense of rotation of the rotor (25).

2. Apparatus according to Claim 1 in which the angle between each paddle (26) and a radius of the rotor (25) passing through the distal part of the attachment region of the paddle (26) is in the range 55° to 80°.

3. Apparatus according to claim 1 or 2 in which each paddle (26) is arranged to contact and wipe around the inside of the container (12) at the base thereof during rotation of the rotor (25).

4. Apparatus according to any preceding claim in which the paddles (26) are curved.

5. Apparatus according to any preceding claim in which the rotor (25) has one or more spiral series of paddles (26) around its axis, axially adjacent paddles (26) being offset from each other around the circumference of the rotor (25).

6. Apparatus according to any preceding claim in which each paddle (26) is formed wholly or partly of resilient material.

7. Apparatus according to any preceding claim in which each paddle (26) is deflectable inwardly upon contact with the hopper (12) or other structure of the apparatus.

8. Apparatus according to any preceding claim in which the container (12) for material comprises an elongate hopper (12) with its longitudinal axis aligned along the intended direction of movement of the apparatus, having sloping sides (13, 14) leading inwardly and downwardly towards the auger (18) which lies along the base of the hopper (12), the said side opening (21) in the container (12) being positioned towards the front of the apparatus.

9. Apparatus according to any preceding claim including a movable member (41) movable relative to the container (12) between a raised position and a lowered position in which the member (41) is slightly above the level of the auger, and drive means (46) for moving the member (41) between the two said positions and for applying a downward force to the member (41) during movement from the raised to the lowered position for breaking bridged material which has built up above the level of the auger (18) during operation.

10. Apparatus according to Claim 9 in which the member (41) comprises a pivotted arm (41) movable between a substantially vertical raised position and a substantially horizontal lowered position, the arm (41) being aligned along the length of the auger (18) when in the lowered position.

11. Apparatus according to any preceding claim in which the impeller (23) rotates in an overshot mode.

**Patentansprüche**

1. Vorrichtung zur Abgabe von Material, mit einem fahrbaren Rahmen zur Bewegung über dem Boden, mit einem Behälter (12) für das Material, mit einer Schnecke (18), die in dem Behälter (12) angeordnet ist, wobei ihre Drehachse im wesentlichen längs der Bewegungsrichtung der Vorrichtung ausgerichtet ist zur Bewegung des Materials vorwiegend längs der Richtung der Schneckenachse, mit einer Öffnung (21) in dem Behälter (12) für den Austritt des Materials, wobei die Öffnung (21) an einer Seite der Vorrichtung relativ zu der Bewegungsrichtung der Vorrichtung im unteren Bereich des Behälters (12) angeordnet ist, mit einem Flügelrad (23), das außerhalb des Behälters (12) in dem Bereich der Seitenöffnung (21) angeordnet ist zum Abwurf des Materials seitlich von der Vorrichtung durch Rotation des Flügelrads (23) um eine Achse, die im wesentlichen längs der Bewegungsrichtung der Vorrichtung ausgerichtet ist, und mit einem Überführungsrotor (25), der koaxial zu der Schnecke (18) gegenüber der Seitenöffnung (21) angeordnet ist zum Transportieren des Materials innerhalb des Behälters (12) zu der Seitenöffnung (21) hin, wobei der Überführungsrotor (25) einen Kern (20) und eine Vielzahl von Schaufeln (26) zum Schieben des Materials durch die Seitenöffnung (21) des Behälters (12) in einer Richtung oder in Richtungen im wesentlichen rechtwinklig zu der Achse der Schnecke (18) aufweist, wobei der Rotor (25) unterschlächtig rotiert und wobei jede Schaufel (26) derart angeordnet ist, daß sie von dem Rotorkern (20) relativ zur Drehrichtung des Rotors (25) nachzieht.

2. Vorrichtung nach Anspruch 1, dadurch gekennzeichnet, daß der Winkel zwischen jeder Schaufel (26) und einem Radius des Rotors (25), der durch den distalen Teil des Befestigungsbereiches der Schaufel (26) verläuft, im Bereich von 55 bis 80° liegt.

3. Vorrichtung nach Anspruch 1 oder 2, dadurch gekennzeichnet, daß jede Schaufel (26) derart angeordnet ist, daß sie während der Rotation des Rotors (25) die Basis innerhalb des Behälters (12) berührt und über die Basis wischt.

4. Vorrichtung nach einem der vorhergehenden Ansprüche, dadurch gekennzeichnet, daß die Schaufeln (26) gebogen sind.

5. Vorrichtung nach einem der vorhergehenden Ansprüche, dadurch gekennzeichnet, daß der Rotor (25) eine oder mehrere spiralförmige Reihen von Schaufeln (26) um seine Achse aufweist, und daß axial benachbarte Schaufeln (26) voneinander um den Umfang des Rotors (25) versetzt sind.

6. Vorrichtung nach einem der vorhergehenden Ansprüche, dadurch gekennzeichnet, daß jede Schaufel (26) vollständig oder z.T. aus elastischem Material besteht.

7. Vorrichtung nach einem der vorhergehenden Ansprüche, dadurch gekennzeichnet, daß jede Schaufel (26) nach einem Kontakt mit dem Trichter (12) oder einem anderen Aufbau der Vorrichtung nach innen ablenkbar ist.

8. Vorrichtung nach einem der vorhergehenden Ansprüche, dadurch gekennzeichnet, daß der Behälter (12) für das Material einen langgestreckten Trichter (12) aufweist, dessen Längsachse zu der beabsichtigen Bewegungsrichtung der Vorrichtung ausgerichtet ist, daß der Trichter schräge Seiten (13, 14) aufweist, die nach innen und nach unten zu der Schnecke (18) gerichtet sind, welche längs der Basis des Trichters (12) angeordnet ist, und daß die Seitenöffnung (21) in dem Behälter (12) gegen die Vorderseite der Vorrichtung hin angeordnet ist.

9. Vorrichtung nach einem der vorhergehenden Ansprüche, mit einem verschiebbaren Element (41), das relativ zu dem Behälter (12) zwischen einer angehobenen Stellung und einer abgesenkten Stellung verschiebbar ist, dadurch gekennzeichnet, daß das Element (41) wenig oberhalb der Höhe der Schnecke vorgesehen ist, und daß eine Antriebseinrichtung (46) zur Bewegung des Elementes (41) zwischen den beiden Stellungen und zur Anlegung einer nach unten gerichteten Kraft auf das Element (41) während der Bewegung von der angehobenen in die abgesenkte Stellung vorgesehen ist, um während des Betriebs eine oberhalb der Schnecke (18) sich gebildete Brücke aus dem Material zu zerstören.

10. Vorrichtung nach Anspruch 9, dadurch gekennzeichnet, daß das Element (41) einen schwenkbaren Arm (41) aufweist, der zwischen einer im wesentlichen vertikalen angehobenen Stellung und einer im wesentlichen horizontalen abgesenkten Stellung bewegbar ist, und daß der Arm (41) in der abgesenkten Stellung zu der Längserstreckung der Schnecke (18) ausgerichtet ist.

11. Vorrichtung nach einem der vorhergehenden Ansprüche, dadurch gekennzeichnet, daß das Flügelrad (23) unterschlächtig rotiert.

**Revendications**

1. Appareillage pour épandre des produits, comportant une structure mobile adaptée à accomplir des mouvements sur le sol, un conteneur (12) pour le produit, une vis transporteuse (18) montée dans le conteneur (12) et ayant son axe de rotation s'étendant sensiblement le long de la direction du mouvement de l'appareillage pour provoquer un mouvement du produit principalement le long de la direction de l'axe de la vis transporteuse, une ouverture (21) dans le conteneur (12) pour évacuer le produit, l'ouverture (21) étant située sur un côté de la l'appareillage par rapport à la direction du mouvement de l'appareillage et dans la région inférieure du conteneur (12), une roue à aubes (23) montée à l'intérieur du conteneur (12) dans la région de l'ouverture latérale (21) pour répandre le produit latéralement à l'appareil par rotation de la roue à aube (23) autout d'un axe s'étendant approximativement le long de la direction du mouvement de l'appareillage, et un rotor de transfert (25) monté coaxiallement avec la vis transporteuse (18) à l'opposé de l'ouverture latérale (21) pour provoquer un mouvement du produit à l'intérieur du conteneur (12) vers l'ouverture latérale (21), le rotor de transfert (25) comprenant une âme (20) et des aubes (26) pour pousser le produit à travers l'ouverture latérale (21) du conteneur (12) dans une direction ou des directions approximativement à angle(s) droit(s) avec l'axe de la vis transporteuse (18), le rotor (25) étant conçu pour tourner en mode d'actionnement par le dessous, et chaque aube (26) étant conçue pour traîner en partant de l'âme (20) du rotor par rapport au sens de rotation du rotor (25).

2. Appareillage selon la revendication 1 dans lequel l'angle entre chaque aube (26) et un rayon du rotor (25) passant par la partie distale de la région de solidarisation de l'aube (26) est dans la gamme de 55° à 80°.

3. Appareillage selon la revendication 1 ou 2 dans lequel chaque pale (26) est adaptée à venir au contact et balayer le tour de l'intérieur du container (12) à sa base, pendant la rotation du rotor (25).

4. Appareillage selon l'une des revendications précédentes dans lequel les aubes (26) sont incurvées.

5. Appareillage selon l'une des revendications précédentes dans lequel le rotor (25) a une ou plusieurs séries en spirale d'aubes (26) autour de son axe, les aubes (26) voisines axialement étant décalées les unes par rapport aux autres autour de la circonférence du rotor (25).

6. Appareillage selon l'une des revendications précédentes dans lequel chaque aube (26) est constituée en totalité ou partiellement en matière élastique.

7. Appareillage selon l'une des revendications précédentes dans lequel chaque aube (26) est repliable vers l'intérieur dans le cas d'un contact avec la trémie (12) ou un autre organe de l'appareillage.

8. Appareillage selon l'une des revendications précédentes dans lequel le conteneur (12) pour produit comprend une trémie (12) allongée ayant son axe longitudinal s'étendant le long de la direction prévue pour le mouvement de l'appareillage, ayant des côtés (13, 14) inclinés menant en direction de l'intérieur et du bas vers la vis transporteuse (18) laquelle s'étend le long de la base de la trémie (12), ladite ouverture latérale (21) du container (12) étant disposée vers l'avant de l'appareillage.

9. Appareillage selon l'une des revendications précédentes comportant un organe (41) mobile par rapport au conteneur (12) entre une position élevée et une position abaissée dans laquelle l'organe (41) est légèrement au-dessus du niveau de la vis transporteuse, et les moyens d'entraînement (46) pour actionner l'organe (41) entre ces deux positions et pour appliquer une force vers le bas à l'organe (41) pendant le mouvement de la position élevée à la position abaissée pour désagréger le produit formant un pont qui s'est aggloméré au-dessus du niveau de la vis transporteuse (18) pendant le fonctionnement.

10. Appareillage selon la revendication 9 dans lequel l'organe (41) comprend un bras pivotant (41) mobile entre une position élevée sensiblement verticale et une position abaissée sensiblement horizontale, le bras (41) s'étendant dans le sens de la longueur de la vis transporteuse (18) lorsqu'il est dans la position abaissée.

11. Appareillage selon l'une des revendications précédentes dans lequel la roue à aube (23) tourne en mode d'actionnement par le dessus.

FIG.1(a).

FIG.1(b)

FIG.1(c)

*12*

*19*

*14*

*13*

*16*

*24*

FIG.3.

*12*

*11*

*34*

*32*

*13*

*18*

*20*

*14*

*19*

*16*

*35*

*33*

FIG.2(a).

FIG.2.

FIG.2(b).

FIG.2(c).

0 102 751